# EUROPÄISCHE PATENTSCHRIFT

(11) **EP 1 668 821 B1**
(45) Veröffentlichungstag und Bekanntmachung des Hinweises auf die Patenterteilung: **07.02.2007**
(21) Anmeldenummer: 04764146.9
(22) Anmeldetag: 16.08.2004
(51) Int. Cl.: H04L 12/24, H04L 29/06

(54) **VERFAHREN ZUR LIZENZIERUNG UND/ODER ZUGANGSAUTORISIERUNG FÜR SOFTWAREMODULE IN EINER VERMITTLUNGSEINRICHTUNG**
METHOD FOR LICENSING AND/OR AUTHORIZING ACCESS TO SOFTWARE MODULES IN A SWITCHING DEVICE
PROCEDE DE DELIVRANCE D'UNE LICENCE ET/OU D'UNE AUTORISATION D'ACCES A DES MODULES LOGICIEL D'UN COMMUTATEUR

(30) Priorität: 30.09.2003 EP 03021963
(43) Veröffentlichungstag der Anmeldung: 14.06.2006
(73) Patentinhaber: SIEMENS AKTIENGESELLSCHAFT, 80333 München (DE)
(72) Erfinder: LEUSCHNER, Klaus, 85591 Vaterstetten (DE); SCHAADE, Stephan, 86807 Buchloe (DE)
(86) Internationale Anmeldenummer: PCT/EP2004/009154
(87) Internationale Veröffentlichungsnummer: WO 2005/043816

(56) Entgegenhaltungen:
- EP-A- 1 076 279
- EP-A- 1 251 656
- DE-A- 10 134 356
- DE-A- 19 845 610
- DE-A1- 10 155 755
- US-A1- 2002 029 347
- US-A1- 2003 018 899

## Beschreibung

### Technisches Gebiet

Die Erfindung bezieht sich auf ein Verfahren zur Lizenzierung und/oder Zugangsautorisierung für Softwaremodule in einer rechnergesteuerten Vermittlungseinrichtung.

### Stand der Technik

In einem Kommunikationsnetz, wie beispielsweise dem Fernsprechnetz, erfolgt die Verbindung zwischen örtlich entfernt liegenden Kommunikationsteilnehmern durch eine abschnittsweise Festlegung von Teilstrecken eines Übertragungsweges. Diese Wegwahl ist zentrale Aufgabe von rechnergesteuerten Vermittlungseinrichtungen. Derartige Vermittlungseinrichtungen werden auch als Vermittlungsrechner, Verbindungsrechner oder Knotenrechner bezeichnet.

In aktuellen Nebenstellennetzen werden rechnergesteuerte Vermittlungseinrichtungen sowohl als herkömmliche Telekommunikationssysteme wie auch als reine IP-System betrieben. Es sind System in unterschiedlichen Größenklassen gebräuchlich, d.h. kleine Nebenstellenanlagen, mit bis zu 15 Nebenstellen, bis hin zu großen Nebenstellenanlagen, mit einigen zehntausend Nebenstellen. Funktion und Dienste von ISDN-Nebenstellenanlagen sind in internationalen Standards der ITU festgelegt.

Jeder Nebenstellenanschluss weist einen durch Leistungsmerkmale vorgegebenen Funktionsumfang auf, welcher im zugeordneten Vermittlungsrechner durch Konfiguration beziehungsweise Administration von Softwaremodulen vorgegeben wird. Diese Konfiguration bzw. Administration kann vom Betreiber eines Nebenstellennetzes veranlasst bzw. selbst durchgeführt werden, indem Verwaltungskommandos der Steuerung Softwaremodule in einer Vermittlungseinrichtung aktivieren.

Leistungsmerkmale gliedern sich je nach Verkehrsart in Leistungsmerkmale für den kommenden Verkehr, für den gehenden Verkehr, für die Leitweglenkung, für den Internetverkehr, für die Gesprächsdatenerfassung, für die Rufumleitung, die Anklopffunktion, für verschiedene mehrsprachige Textausgaben, ISDN-Leistungsmerkmale usw. Jedem dieser Leistungsmerkmale entspricht in der Vermittlungseinrichtung eine bestimmte Funktionskomponente, welche zumeist durch ein Softwaremodul realisiert ist.

Die aktuell verfügbare Funktionalität einer Vermittlungseinrichtung wird durch die aktivierten SoftwareModule bestimmt. In der Regel erwirbt der Betreiber des Nebenstellennetzes vom Hersteller der Vermittlungseinrichtung eine Nutzungslizenz für diese Softwaremodule.

Da die Anforderung an ein Kommunikationssystem sich an dem durch die Kommunikationsteilnehmer vorgegebenen Bedarf orientieren muss, ist es erforderlich, die Ausbaustufe von Vermittlungseinrichtungen im Netz von Zeit zu Zeit neu zu konfigurieren bzw. administrieren. So kann es beispielsweise erforderlich sein, die maximal mögliche Anzahl von Kommunikationsteilnehmern einer Nebenstellenanlage zu vergrößern, oder neue verbesserte Leistungsmerkmale anzubieten. Diese Anpassung kann dadurch erreicht werden, dass neue Softwaremodule in die Datenbasis der Vermittlungseinrichtung geladen und die Nutzungslizenz des Betreibers entsprechend angepasst wird. Das Laden von neuen Softwaremodulen ist aber mit einem entsprechenden Aufwand verbunden, so dass man seitens der Hersteller der Vermittlungseinrichtungen dazu übergegangen ist, Geräte mit einer vollumfänglichen Anwendungssoftware auszuliefern, wobei die Anwendungssoftware aber nur im Rahmen einer Lizenzvereinbarung genutzt werden darf, die zwischen dem Gerätehersteller und dem Netzbetreiber vereinbart ist. Der Hersteller von Vermittlungseinrichtungen ist dabei bestrebt, dass durch Schutzmechanismen sichergestellt ist, dass sich der tatsächliche Nutzungsumfang nur im Rahmen dieses Lizenzabkommens bewegt und eine missbräuchliche Nutzung weitgehend ausgeschlossen ist.

Aus der Computertechnik sind verschiedene Schutzmechanismen für Softwareprodukte bekannt. Bei Personalcomputern ist es heutzutage üblich, Softwareschutzstecker, sog. Dongle, zu verwenden. Ein Softwareschutzstecker ist ein zusätzliches Hardwareteil und enthält eine eindeutige und unveränderbare Kenninformation. Beim Start der zu schützenden Software führt das Programm eine Abfrage durch und prüft, ob die korrespondierende Kenninformation im Dongle hinterlegt ist. Ist dies der Fall, dann ist die Software auf dem Personalcomputer ablauffähig, andernfalls wird die Ausführung nicht zugelassen. Ein Dongle kann für ein bestimmtes Software-Produkt an einer anderen Rechnereinheit weiter verwendet werden, vorausgesetzt Hardware und Betriebssystem stimmen überein. Werden an einer Rechenanlage mehrere Software-Produkte verwendet, sind jeweils korrespondierende Softwareschutzstecker erforderlich.

Die Verwendung von Softwareschutzstecker bei der Konfiguration beziehungsweise Administration von Vermittlungseinrichtungen ist umständlich und hinsichtlich der Sicherheit problematisch, da das Speichern von digitalen Schlüssel mit einem Softwareschutzstecker nicht vorgesehen ist.

Das Dokument DE 101 34 356 verhindert eine mißbräuchliche Verwendung von lizenzierter kommerzieller Software auf Personalcomputern. Eine Public Key Infrastructure (PKI) - Karte, die dem Lizenzinhaber zugeordnet ist, dient dem Speichern von Lizenzzertifikaten, der Nutzerauthentifizierung und der Verschlüsselung von Verbindungen und Daten. Jedes Mal, wenn eine lizenzierte Softwarekomponente installiert werden soll, wird automatisch eine geschützte Internetverbindung zu einem Herstellerserver aufgebaut und die vollständige Installationsprozedur geladen.

In der Veröffentlichung US 2003/018899 A1 wird die Verwendung von Lizenzen in einem Kommunikationssystem, das eine Mehrzahl von Endgeräten beinhaltet und in dem nutzerspezifische Lizenzen zugeteilt sind, überwacht. Die Verwendung der einzelnen Lizenzen wird nach deren Freischaltung nutzerabhängig protokolliert. Bei Überschreiten eines Schwellwertes wird eine Nachricht an den Nutzer geschickt.

### Darstellung der Erfindung

Der Erfindung liegt die Aufgabe zu Grunde, die Lizenzierung und/oder Zugangsautorisierung für Softwaremodule in einer rechnergesteuerten Vermittlungseinrichtung zu vereinfachen und eine flexible Anpassung an wechselnden Bedarf zu ermöglichen.

Die Lösung der Aufgabe erfolgt durch die Merkmale des Patentanspruchs 1. Auf vorteilhafte Ausgestaltungen der Erfindung nehmen die Unteransprüche Bezug.

Der Hauptaspekt der erfindungsgemäß vorgeschlagenen Lösung besteht darin, Softwaremodule, die in der Vermittlungseinrichtung vollumfänglich bereit gehalten werden, skalierbar, d.h. nur innerhalb eines vorgegebenen Lizenzrahmens, zum Einsatz zu bringen.

Gemäß der Erfindung ist die Verwendung einer Lizenzdatenbasis vorgesehen, in welcher vollumfänglich all jene Softwaremodule gespeichert sind, welche für eine volle Ausbaustufe der Vermittlungseinrichtung erforderliche sind. Die Lizenzdatenbasis kann beispielsweise durch einen herkömmlichen Plattenspeicher, eine Harddisk, realisiert sein. Jedem Softwaremodul ist auf dieser Harddisk eine Lizenzinformation zugeordnet. Wird in Folge einer Konfiguration oder Administration zumindest eines dieser Softwaremodule aktiviert, wird in einem ersten Schritt eine Interaktion zwischen der Lizenzdatenbasis und einem computerlesbaren Datenträger ausgelöst. Ziel dieser Interaktion ist es, die Einmaligkeit zwischen der für die Lizenzdatenbasis verwendeten Harddisk und einer auf einem computerlesbaren Datenträger vorhandenen geheimen Information zu prüfen. Diese Identitätsprüfung kann beispielsweise durch Vergleich zwischen der Harddiskkennnummer und einem auf dem computerlesbaren Datenträger abgelegten geheimen Schlüssels erfolgen. Das Ergebnis dieser Identitätsprüfung ist eine Hardwarekenninformation, aus welcher hervorgeht, ob der Schlüssel und die Speicherhardware zueinander passen. In einem weiteren Schritt wird nun diese Hardwarekennung zusammen mit der Lizenzinformation des zumindest einen Softwaremoduls vom Vermittlungsrechner über eine Kommunikationsverbindung an einen von der Vermittlungsstelle örtlich entfernt liegenden Lizenzmanager übermittelt. Der Lizenzmanager entscheidet über die Autorisation des zumindest einen zu konfigurierenden Softwaremoduls, indem er eine Lizenzbestätigungsinformation erzeugt, die er an die Vermittlungseinrichtung rückübermittelt. Die Kommunikation zwischen der Vermittlungseinrichtung und dem Lizenzmanager kann beispielsweise über eine Telefon- bzw. Fax-Verbindung erfolgen, oder durch Rechnerkommunikation hergestellt werden. Da der Lizenzmanager einerseits Informationen über die Identität der Hardwareplattform und anderseits Informationen über den darauf betrieben Nutzungsumfang von Softwaremodulen vorliegen, ist die Lizenzierung bzw. Zugangsautorisation zu Softwaremodulen auf einfache Weise möglich.

Um Missbrauch weitgehend auszuschließen, wird bei der Interaktion zwischen der Lizenzdatenbasis und dem computerlesbaren Datenträger ein kryptographischer Algorithmus verwendet.

Bevorzugt ist, dass bei der Interaktion zwischen der Lizenzdatenbasis und dem computerlesbaren Datenträger ein an sich bekanntes asymmetrisches Verschlüsselungsverfahren verwendet wird.

Bevorzugter Weise ist der computerlesbare Datenträger als portabler Datenträger ausgebildet. Dadurch kann im Falle eines Hardwareausfalls eine Hauptleiterplatte einfach gewechselt und der portable Datenträger auf der neuen Hauptleiterplatte weiter verwendet werden. Die Vermittlungseinrichtung muss nicht vollständig neu konfiguriert werde. Dies ist von entscheidender Bedeutung, da die Ausfallzeiten einer Vermittlungseinrichtung dadurch wesentlich reduziert werden können.

Der portable Datenträger kann vorteilhaft durch eine Smart-Card, eine Chip-Card oder eine Security-Digital-Multi-Media-Card (SD/MMC) gebildet sein. Verglichen mit einem Softwareschutzstecker sind die oben genannten Karten kostengünstiger. Umgang und Handhabung dieser Karten entspricht weitgehend denen von SIM-Karten, wie sie bei Handys verwendet werden. Jede Karte ist steckbar und kann somit auf einer neuen Vermittlungseinrichtung weiter verwendet werden.

Hinsichtlich der Datensicherheit ist es günstig, wenn die Hardwarekenninformation und die Lizenzinformationen vom Vermittlungsrechner an den Lizenzmanager verschlüsselt übermittelt werden. Der Security-Level ist durch den Funktionsumfang der o.g. Karten skalierbar.

In einer bevorzugten Ausgestaltung ist der Lizenzmanager als Server realisiert, der vom Hersteller der Vermittlungseinrichtung verwaltet wird. Der Server weist eine Lizenzreferenzdatenbasis auf. Diese beinhaltet in Form von Referenzinformationen die von einem Betreiber käuflich erworbenen Lizenzen.

Hierbei empfiehlt es sich, dass der Lizenzmanager beim Erzeugen der Lizenzbestätigungsinformation eine Lizenzreferenzdatenbasis verwendet, in welcher Referenzinformationen, die jeweils Betreibern von Vermittlungseinrichtungen zugeordnete Referenzinformationen enthalten, gespeichert sind. Dies erleichtert nicht nur die Verwaltung von Lizenzen, sondern ermöglich auch, dass beispielsweise für Großkunden Lizenzen in einem "Lizenzpool" verwaltet werden können. Dadurch können im "Lizenzpool" befindliche, bezahlte, aber nicht genutzte Lizenzen flexibel dem aktuellen Bedarf des Kunden zugeordnet werden.

In einer bevorzugten Ausgestaltung ist vorgesehen, dass die Lizenzinformation eines zu konfigurierenden Softwaremoduls in den vom Betreiber erworbenen Lizenzen enthalten ist, ein Lizenzbestätigungsinformation erzeugt wird, welche in der Vermittlungseinrichtung den Dauerbetrieb des Softwaremoduls autorisiert.

In einer weiteren bevorzugten Ausgestaltung ist vorgesehen, dass für den Fall, dass die Lizenzinformation eines zu konfigurierenden Softwaremoduls nicht in den vom Betreiber erworbenen Lizenzen enthalten ist, eine Lizenzbestätigungsinformation erzeugt wird, welche in der Vermittlungseinrichtung während einer vorgegebenen Zeitdauer einen Testbetrieb des Softwaremoduls autorisiert.

Günstig ist, wenn die Kommunikationsverbindung zwischen der Vermittlungseinrichtung und dem Lizenzmanager über ein leitungsvermittelndes und/oder paketvermittelndes Kommunikationsnetz geführt wird. Dadurch ist die Vermittlungseinrichtung durch automatisch ablaufende Schritte fernadministrierbar bzw. fernkonfigurierbar.

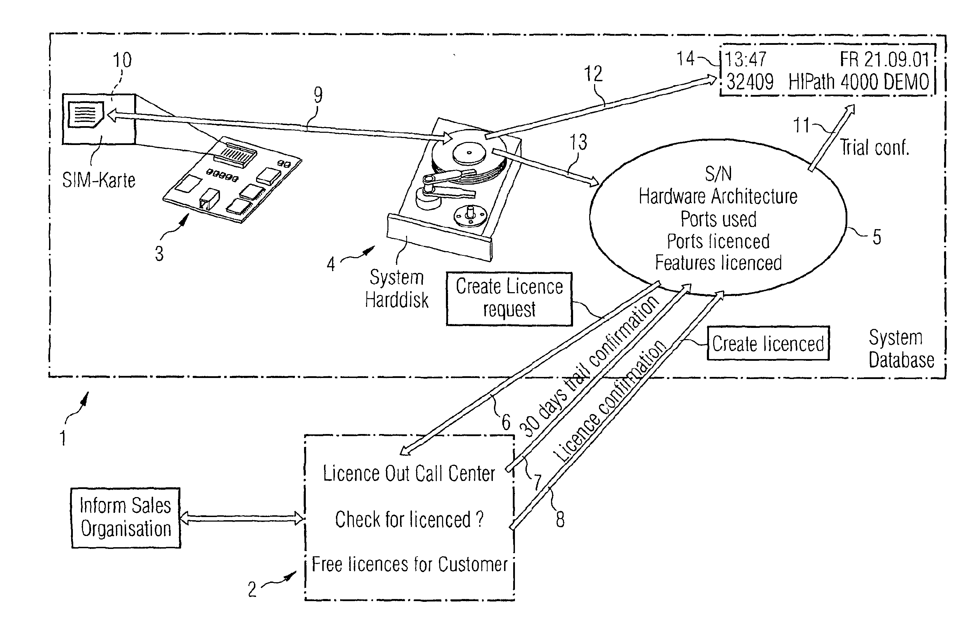

### Kurzbeschreibung der Zeichnung

Die Erfindung wird nachfolgend in beispielhafter Weise unter Bezugnahme auf die beigefügte Zeichnung erläutert.

Die einzige Figur zeigt schematisch ein Szenario einer Lizenzierung und/oder Zugangsautorisierung von Softwaremodulen einer rechnergesteuerten Vermittlungseinrichtung.

### Ausführung der Erfindung

Die Figur zeigt eine Vermittlungseinrichtung 1, die über eine durch Pfeile 6,7,8 angedeutete Kommunikationsverbindung mit einem Lizenzmanager 2 kommuniziert. In der Vermittlungseinrichtung 1 ist mit dem Bezugszeichen 4 eine Lizenzdatenbasis ("System Harddisk") bezeichnet, welche Teil einer Systemdatenbsis 5 ist. Der Harddisk 4 ist ein computerlesbaren Datenträger 3 zugeordnet. Dieser Datenträger 3 ist als SIM-Karte 10 ausgeführt. Sie ist steckbar in einer Leseeinrichtung, einer sogenannten SSU-Einheit (Security Service Unit) auf einer Leiterplatte der Vermittlungseinrichtung angeordnet. Bei einem Ausfall der Leiterplatte ist es möglich, die SIM-Karte auf einer neuen Leiterplatte weiter zu verwenden. Der Funktionsumfang des Kontrollers auf der SIM-Karte entspricht etwa dem von SIM-Karten wie sie bei Bankkarten Verwendung finden. Auf der Leiterplatte ist der SIM-Karte ein Kontroller ( z.B. vom Typ TDA 8007) zur Ansteuerung der Karte zugeordnet. In der Lizenzdatenbasis 4 befinden sich die Softwaremodule, welche Leistungsmerkmale der Vermittlungseinrichtung repräsentieren.

Für die folgende Beschreibung des Verfahrensablaufs, sei zunächst davon ausgegangen, dass die Lizenzdatenbasis 4 der Vermittlungseinrichtung 1 zwar sämtliche Softwaremodule enthält, die für eine volle Leistungskapazität der Anlage erforderlich sind, aber aktuell nur jene Softwaremodule zum Einsatz kommen, die der Betreiber der Vermittlungseinrichtung 1 vom Hersteller der Vermittlungseinrichtung lizenziert hat.

Um die Ausbaukapazität der Vermittlungseinrichtung zu erweitern und an einen gewachsenen Bedarf anzupassen, wird seitens des Betreibers wenigstens ein nicht lizenziertes Softwaremodule aktiviert. Diese Aktivieren löst zunächst eine Interaktion zwischen der Lizenzdatenbasis 4 und dem Datenträger 3 aus. (Diese Interaktion ist in der Zeichnung durch den Pfeil 9 angedeutet.) Ziel dieser Interaktion 9 ist es, zu prüfen, ob die System-Harddisk 4 zu einem auf dem Datenträger 3 vorhandenen geheimen Schlüssel passt. Das Ergebnis dieser Identitätsprüfung ist eine Hardwarekenninformation, aus welcher hervorgeht, ob der Schlüssel und die Speicherhardware als zueinander passend erkannt wurden.

Ist dies der Fall, wird in einem darauffolgenden Schritt (Pfeil 13) eine entsprechende Hardwarekenninformation erzeugt und diese zusammen mit der Lizenzinformation des zumindest einen Softwaremoduls vom Vermittlungsrechner 1 über eine Kommunikationsverbindung 6 an den von der Vermittlungsstelle 1 örtlich entfernt liegenden Lizenzmanager 2 übermittelt. Im Lizenzmanager 2 wird in einer Lizenzreferenzdatenbasis nachgefragt, ob der identifizierte Betreiber berechtigt ist, das gewünschte ggf. bereits konfigurierte Softwaremodul in seiner Anlage zu nutzen. Ist der Benutzer aufgrund einer bestehenden Lizenzvereinbarung berechtigt, entscheidet der Lizenzmanager 2 über die Autorisation des zumindest einen zu konfigurierenden Softwaremoduls in der Vermittlungsstelle 1, indem er eine Lizenzbestätigungsinformation (in der Zeichnung "License Confirmation") erzeugt und diese an die Vermittlungseinrichtung 1 rückübermittelt. (Die Rückübermittlung ist in der Zeichnung durch den Pfeil 8 dargestellt.) Die Anwendungssoftware der Vermittlungseinrichtung 1 ist dadurch hinsichtlich ihres Leistungsumfangs, dem Lizenzrahmen entsprechend, angepasst.

Hat hingegen der Benutzer nicht die Lizenz für die gewünschte ggf. bereits neu konfigurierte Ausbauversion der Vermittlungseinrichtung 1, so erzeugt der Lizenzmanager eine von der oben genannten abweichende zweite Lizenzbestätigungsinformation (in der Zeichnung als "30 days trial confirmation" bezeichnet). Auch im vorliegenden Fall wird diese zweite Lizenzbestätigungsinformation an die Vermittlungseinrichtung 1 rückübermittelt. (Die Rückübermittlung ist in der Zeichnung durch den Pfeil 7 dargestellt.) Wie der Pfeil 11 ("Trial confirmation") andeutet, führt diese Informationsübermittlung in der Vermittlungseinrichtung 1 dazu, dass die gewünschte Ausbaukapazität nicht dauerhaft sondern nur probeweise, beispielsweise für einen bestimmten Zeitraum, im vorliegenden Beispiel für 30 Tage, freigeschaltet wird.

Ein Probebetrieb wird auch in dem Fall freigegeben, wenn der Schlüssel und der Speicher als nicht zu einander passend erkannt werden. Dies ist in der Zeichnung durch den Pfeil 12 angedeutet.

Der Probebetrieb kann am Display eines Teilnehmerendgerätes dargestellt werden. In der Zeichnung ist dies beispielhaft durch das Feld 14 schematisch dargestellt. Es zeigt: die aktuelle Uhrzeit "13:45", das aktuelle Datum "21.09.01", den Typ der Anlage "HiPath4000", die eigene Rufnummer "32409" sowie die Kennzeichnung "DEMO". Aus der Kennzeichnung "DEMO" geht hervor, dass dieses Leistungsmerkmal nicht dauerhaft, sondern nur für Testzwecke freigeschaltet ist.

## Patentansprüche

1. Verfahren zur Zugangsautorisierung für Softwaremodule in einer rechnergesteuerten Vermittlungseinrichtung (1), deren Leistungsmerkmale durch eine autorisierte Nutzung einer Anzahl dieser Softwaremodule vorgegeben wird, wobei eine Lizenzdatenbasis (4) verwendet wird, in welcher die Softwaremodule und jeweils diesen zugeordnete Lizenzinformationen gespeichert sind,
**dadurch gekennzeichnet,**
**dass** die Lizenzdatenbasis (4) in der Vermittlungseinrichtung (1) eingerichtet ist und eine Aktivierung zumindest eines in der Lizenzdatenbasis (4) bereitgehaltenen aber nicht genutzten Softwaremoduls eine Interaktion zwischen der Lizenzdatenbasis (4) und einem, der Vermittlungseinrichtung (1) zugeordneten, portablen, computerlesbaren Datenträger (3) auslöst, wobei eine Hardwarekenninformation erzeugt wird,
**dass** die Hardwarekenninformation und die Lizenzinformation des zumindest einen Softwaremoduls vom Vermittlungsrechner (1) über eine Kommunikationsverbindung (6) an einen von der Vermittlungsstelle (1) örtlich entfernt liegenden Lizenzmanager (2) übermittelt wird,
**dass** der Lizenzmanager (2) eine Lizenzbestätigungsinformation erzeugt und diese an den Vermittlungsrechner rückübermittelt, wobei er beim Erzeugen der Lizenzbestätigungsinformation eine Lizenzreferenzdatenbasis verwendet, in welcher die jeweils von einem Betreiber einer Vermittlungseinrichtung (1) käuflich erworbenen Lizenzen für Softwaremodule gespeichert sind, und
**dass** die Lizenzbestätigungsinformation im Vermittlungsrechner (1) über die Autorisation des zumindest einen Softwaremoduls entscheidet.

2. Verfahren nach Anspruch 1, **dadurch gekennzeichnet, dass** bei der Interaktion zwischen der Lizenzdatenbasis (4) und dem computerlesbaren Datenträger (3) ein kryptographischer Algorithmus verwendet wird.

3. Verfahren nach Anspruch 1, **dadurch gekennzeichnet, dass** bei der Interaktion zwischen der Lizenzdatenbasis (4) und dem computerlesbaren Datenträger (3) ein asymmetrisches Verschlüsselungsverfahren verwendet wird.

4. Verfahren nach einem der Ansprüche 1 bis 3, **dadurch gekennzeichnet, dass** als portabler Datenträger (3) eine Smart-Card, oder eine Chip-Card oder eine SD/Multi-Media-Card verwendet wird.

5. Verfahren nach einem der Ansprüche 1 bis 4, **dadurch gekennzeichnet, dass** die Hardwarekenninformation und die Lizenzinformationen vom Vermittlungsrechner (1) an den Lizenzmanager (2) verschlüsselt übermittelt werden.

6. Verfahren nach einem der Ansprüche 1 bis 5, **dadurch gekennzeichnet, dass** der Lizenzmanager (2) als Server realisiert ist und über ein Kommunikationsnetz mit der Vermittlungseinrichtung (1) vernetzt ist.

7. Verfahren nach einem der Ansprüche 1 bis 6, **dadurch gekennzeichnet, dass** für den Fall, dass die Lizenzinformation eines zu konfigurierenden Softwaremoduls in den vom Betreiber erworbenen Lizenzen enthalten ist, ein Lizenzbestätigungsinformation erzeugt wird, welche in der Vermittlungseinrichtung (1) den Dauerbetrieb des zumindest einen Softwaremoduls autorisiert.

8. Verfahren nach einem der Ansprüche 1 bis 6, **dadurch gekennzeichnet, dass** für den Fall, dass die Lizenzinformation eines zu konfigurierenden Softwaremoduls nicht in den vom Betreiber erworbenen Lizenzen enthalten ist, ein Lizenzbestätigungsinformation erzeugt wird, welche in der Vermittlungseinrichtung (1) während einer vorgegebene Zeitdauer einen Testbetrieb des zumindest einen Softwaremoduls autorisiert.

9. Verfahren nach einem der Ansprüche 1 bis 8, **dadurch gekennzeichnet, dass** die Kommunikationsverbindung (6,7,8) zwischen der Vermittlungseinrichtung (1) und dem Lizenzmanager (2) über ein leitungsvermittelndes und/oder paketvermittelndes Kommunikationsnetz geführt wird.

## Claims

1. Method for authorising access to software modules in a computer-controlled switching device (1) whose service features are predefined by an authorised use of a number of said software modules, wherein a licence database (4) is used in which the software modules and licence information assigned to each of said software modules are stored,
**characterised in that**
the licence database (4) is set up in the switching device (1) and an activation of at least one software module made available in the licence database (4) but not used initiates an interaction between the licence database (4) and a portable, computer-readable data medium (3) assigned to the switching device (1), with hardware identification information being generated,
the hardware identification information and the licence information of the at least one software module are transmitted by the switching processor (1) via a communications link (6) to a licence manager (2) located at a geographical distance from the switching centre (1),
the licence manager (2) generates licence confirmation information and transmits this back to the switching processor, in which case the licence manager (2), when generating the licence confirmation information, uses a licence reference database in which the licences for software modules purchased in each case by an operator of a switching device (1) are stored, and
the licence confirmation information in the switching processor (1) decides on the authorisation of the at least one software module.

2. Method according to claim 1, **characterised in that** a cryptographic algorithm is used during the interaction between the licence database (4) and the computer-readable data medium (3).

3. Method according to claim 1, **characterised in that** an asymmetrical encryption method is used during the interaction between the licence database (4) and the computer-readable data medium (3).

4. Method according to one of claims 1 to 3, **characterised in that** a smartcard, a chipcard or an SD/multimedia card is used as the portable data medium (3).

5. Method according to one of claims 1 to 4, **characterised in that** the hardware identification information and the licence information are transmitted by the switching processor (1) to the licence manager (2) in encrypted form.

6. Method according to one of claims 1 to 5, **characterised in that** the licence manager (2) is implemented as a server and is networked with the switching device (1) via a communications network.

7. Method according to one of claims 1 to 6, **characterised in that** in the event that the licence information of a software module that is to be configured is contained in the licences purchased by the operator, licence confirmation information is generated which authorises continuous operation of the at least one software module in the switching device (1).

8. Method according to one of claims 1 to 6, **characterised in that** in the event that the licence information of a software module that is to be configured is not contained in the licences purchased by the operator, licence confirmation information is generated which authorises trial operation of the at least one software module in the switching device (1) for a predefined period of time.

9. Method according to one of claims 1 to 8, **characterised in that** the communications link (6,7,8) between the switching device (1) and the licence manager (2) is routed via a circuit-switching and/or packet-switching communications network.

## Revendications

1. Procédé d'autorisation d'accès à des modules logiciels d'un commutateur (1) assisté par ordinateur, dont les caractéristiques de performance sont préétablies par une utilisation autorisée d'un certain nombre de ces modules logiciels, une base de données de licences étant utilisée, dans laquelle les modules logiciels et les informations relatives aux licences attribuées à ces modules logiciels respectifs sont mémorisés, **caractérisé en ce que**
la base (4) de données de licences est installée dans le commutateur (1) et une activation d'au moins un module logiciel tenu à disposition dans la base (4) de données de licences mais non utilisé déclenche une interaction entre la base (4) de données de licences et un support de données lisible par ordinateur portable attribué au commutateur (1), une information d'identification matérielle étant créée,
**en ce que** l'information d'identification matérielle et l'information relative à la licence d'au moins un module logiciel sont transmises par l'ordinateur (1) de commutation à l'aide d'une liaison (6) de communication à un gestionnaire (2) de licences se trouvant dans un lieu éloigné de celui du poste (1) de commutation,
**en ce que** le gestionnaire (2) de licences crée une information de confirmation de licence et retransmet ladite information à l'ordinateur de commutation, ledit gestionnaire de licences utilisant lors de la création de l'information de confirmation de licence une base de données de référence de licences, dans laquelle les licences, acquises moyennant paiement respectivement par un opérateur d'un commutateur (1), pour des modules logiciels sont mémorisées, et
**en ce que** l'information de confirmation de licence de l'ordinateur (1) de commutation se prononce sur l'autorisation d'au moins un module logiciel.

2. Procédé suivant la revendication 1, **caractérisé en ce que** l'on utilise un algorithme cryptographique lors de l'interaction entre la base (4) de données de licences et le support (3) de données lisible par ordinateur.

3. Procédé suivant la revendication 1, **caractérisé en ce que** l'on utilise un procédé de codage asymétrique lors de l'interaction entre la base (4) de données de licences et le support (3) de données lisible par ordinateur.

4. Procédé suivant l'une des revendications 1 à 3, **caractérisé en ce que** l'on utilise comme support (3) de données portable une Smart Card, ou une Chip Card ou une SD/Multimédia Card (SD = Secure Digital).

5. Procédé suivant l'une des revendications 1 à 4, **caractérisé en ce que** l'information d'identification matérielle et les informations relatives aux licences sont transmises de façon codée par l'ordinateur (1) de commutation au gestionnaire (2) de licences.

6. Procédé suivant l'une des revendications 1 à 5, **caractérisé en ce que** le gestionnaire (2) de licences est réalisé en tant que serveur et **en ce qu'**il est relié par réseau au commutateur (1) à l'aide d'un réseau de communication.

7. Procédé suivant l'une des revendications 1 à 6 **caractérisé en ce que**, dans le cas où l'information relative à la licence d'un module logiciel à configurer est contenue dans les licences acquises par l'opérateur, une information de confirmation de licence est créée, laquelle autorise la fonctionnement permanent d'au moins un module logiciel dans le commutateur (1).

8. Procédé suivant l'une des revendications 1 à 6, **caractérisé en ce que**, dans le cas où l'information relative à la licence d'un module logiciel à configurer n'est pas contenue dans les licences acquises par l'opérateur, une information de confirmation de licence est créée, laquelle autorise un fonctionnement d'essai d'au moins un module logiciel dans le commutateur (1) pendant une durée préétablie.

9. Procédé suivant l'une des revendications 1 à 8, **caractérisé en ce que** la liaison (6, 7, 8) de communication entre le commutateur (1) et le gestionnaire (2) de licences est conduite sur un réseau de communication commutant par ligne et/ou par paquet.
